# EUROPEAN PATENT APPLICATION

(11) **EP 1 676 678 A2**
(43) Date of publication of application: **05.07.2006**
(21) Application number: 06250005.3
(22) Date of filing: 03.01.2006
(51) Int. Cl.: B25H 3/00, B62B 1/26

(54) **Portable tool caddy**

(30) Priority: 03.01.2005 IL 16610105
(71) Applicant: KETER PLASTIC LTD., Herzelyia 46852 (IL)
(72) Inventor: Kaplan, Pablo, Herzelyia 46852 (IL); Evans, Richard, Rishon Letzion 7532 (IL)
(74) Representative: Smith, Samuel Leonard

(57) **Abstract**

A tool caddy (10) comprises a rigid bucket (12) and a non-rigid tool organizer (14). The bucket (12) comprises a bottom support portion (16), with vertical walls (18) extending upwardly therefrom, forming front, back and side faces and defining a bucket interior, and an upper rim. The bucket further comprises at least two wheels (24) and a retractable arm (30) with a handgrip (32). The arm is extendable between a fully extended position and a fully retracted position and is attached to the bucket at the back face thereof. The bucket also has a sheath (28), integral with the back face of the bucket and giving rise to a receptacle adapted for slidingly receiving the arm. The tool organizer comprises exterior flaps adapted to cover outward faces of the bucket and interior flaps adapted to cover interior faces of the bucket. The exterior flaps are of sufficient length to substantially cover at least the entire front face of the bucket and is formed so as to not interfere with the operation of the wheels. The tool organizer also has contrivances, disposed on the flaps, for retaining various articles.

## Description

### FIELD OF THE INVENTION

This invention relates to receptacles used to transport tools, and especially to buckets adapted for that purpose.

### BACKGROUND OF THE INVENTION

It is a well accepted practice among tradesmen, especially those in various fields of construction, to use buckets or pails to transport tools to and around a jobsite. These buckets are often discarded five gallon containers which originally held spackle, paint, or the like. The use of these buckets is particularly convenient, since they are plentiful around jobsites and have no real cost, since they are destined to be discarded if not otherwise used. Their interiors are large enough to fit hand tools and many handheld power tools, and they are typically provided with a carrying handle for easy transport thereof.

One drawback of using such buckets for the above purpose is that smaller tools and pieces of hardware placed within may easily become misplaced among the larger tools, requiring time for the tradesman to search through the bucket for them when needed, resulting in lost time. It is therefore advantageous to provide retaining devices for use with a bucket for storing small tools and hardware.

Additionally, these buckets are often transported by use of an external trolley or cart. These carts are typically in the form of a hand truck, or other multipurpose conveyance, which are usually cumbersome. It is therefore further advantageous to provide a cart for a bucket which is easily used.

There are known in the art several tool organizers adapted for use with a bucket to organize smaller tools therein. US 6,315,310 discloses a portable vessel receptacle which includes a combination of a frame, preferably a wheeled frame supporting a bucket container or vessel. The vessel is a generally cylindrical open top receiver having a lifting handle, and optionally being provided with a fabric tool carrying cowl. The lower portion of the bucket is releasably secured to the frame by means of a positionally adjustable clamping pad along with a pair of accurately spaced radially inwardly extending gussets which are secured to the frame, thereby facilitating an additional lifting mechanism for the entire assembly. For added stability, the top portion of the bucket or vessel is reliably releasably secured to the frame by means of a "J" hook or claw which is adjustably positioned on an upright or vertical handle, with the claw engaging and restraining the vessel at a point adjacent the upper edge thereof, preferably being engaged with the handle receiving projections on the outer surface of the bucket. Optionally, the assembly may be provided with a shroud for carrying or holding tools, such as hand tools or of the like with the shroud being configured to fit within the cylindrical vessel. The vessel also provides a receptacle for debris as well as for articles useful for homeowners as well as tradesmen for home projects and similar applications.

US 5,174,447 discloses a tool carrier for use with open top containers formed initially as a rectangular blank having side edges sewn together to form a cylinder. The cylinder is inserted within the open top area of the container and oriented to be draped on both interior and exterior side walls of the container. Thus, the tool carrier forms inner and outer sheaths upon which a plurality of tools can be carried. The tools are carried on the inner and outer sheaths by means of pockets and loops through which the tools or a portion thereof are to pass.

US 4,993,551 discloses a tool organizer and storage device to interfit over the upper rim of a five gallon bucket. The device includes a tubular cloth panel which drapes and conforms over the inside and outside surfaces of the bucket with inner pockets sewn on the panel to drape on the inside of the bucket and outer pockets sewn on the panel to drape on the outside surface of the bucket with slots cut lengthwise from an end of the cloth panel of sufficient length to allow the panel to drape downwardly around the handle ends of the bucket on the outside surface with ties between the edges of the slots to fix the device under the handle ends.

US 6,454,281 discloses a utility tool cart that is especially designed for carrying tools and equipment around work environments such as construction sites. The utility tool cart is a hand cart that is particularly adapted to carry equipment over long distances and/or difficult terrain. The utility tool cart contains a pair of wheels near the bottom thereof, a first support unit for holding a first tool container, a second support unit for holding a second tool container and a telescoping shaft having a hand grip.

US 5,806,867 discloses a wheeled trolley having a resilient engaging wall for retaining a standard wheeled trolley having a resilient engaging wall for retaining a standard sized bucket containing a load. The trolley includes a set of wheels to permit easy movement over a surface. The bottom of the bucket is disposed between the wheels to provide a low center of gravity to ensure stability. The bucket is retained by a resilient engaging wall such that the trolley is lifted along with the bucket for moving up and down stairs. An adapter is located on the trolley for interchangeably receiving a handle. The handle may alternatively serve as a handle, or an extension of a handle for a tool associated with the use of the trolley.

It is an object of the present invention to provide a tool carrying bucket fitted with a pouched organizer and integrated with wheels and a maneuvering arm.

### SUMMARY OF THE INVENTION

According to the present invention, there is provided a tool caddy, comprising a rigid bucket and a non-rigid tool organizer. The bucket comprises a bottom support portion, vertical side walls extending upwardly therefrom and defining a bucket interior, and an upper rim. It further comprises at least two wheels joined and attached to the bucket by an axle extending therebetween, a retractable arm with a handgrip, and a sheath, integrated externally to a back face of the bucket, adapted for receiving the arm. The retractable arm is extendable between a fully extended position and a fully retracted position.

According to an embodiment of the present invention, the tool caddy further comprises a carrying handle. According to one particular design, the carrying handle is made of a flexible material and may be length-adjustable to facilitate carrying it at a hand-carrying position or a shoulder-carrying position. Typically, the carrying handle is detachably connectable to attachments formed in the upper rim of the bucket, adapted to receive therein the handle, and, by a different application, the carrying handle may be detachably connectable to attachments integrated in the tool organizer to facilitate carrying it independent of the bucket.

The tool organizer comprises wings for covering outward and interior faces of the bucket. Disposed upon the wings are contrivances for retaining various tool and articles, including some hooks, loops, pockets, and pouches. The various contrivances are disposed on surfaces of the tool organizer adapted to cover the entire outer perimeter including the back face, and the interior of the bucket. The tool organizer further comprises openings adapted to allow passage therethrough of the arm and the handle of the bucket. The tool organizer is of sufficient length to substantially cover at least the entire front face of the bucket and is formed so as to not interfere with the operation of the wheels.

According to another arrangement of the present invention, the at least two wheels are joined and attached to the bucket by a common axle and, by a particular arrangement, said axle extends through a lower end of the retractable arm.

The tool caddy may further comprise a cover adapted to protect the contents retained in the tool caddy, said cover may extend over the opening of the bucket in which case it is likely to be fitted with a zipper or other closing arrangements such as hook and pile fastener (Velcro™). Alternatively, the cover may extend over the entire bucket.

### BRIEF DESCRIPTION OF THE DRAWINGS

In order to understand the invention and to see how it may be carried out in practice, several embodiments will now be described, by way of non-limiting examples only, with reference to the accompanying drawings, in which:
**Figs. 1A** and **1B** are perspective views of a tool caddy according to one aspect of the present invention;
**Fig. 2** is perspective view of a bucket of the present invention;
**Fig. 3** is a side view of the bucket shown in Fig. 2;
**Fig. 4** is perspective view of a tool caddy according to another embodiment of the present invention having a cover.
**Figs. 5A** and **5B** are side and perspective views, respectively, of the bucket of the present invention according to further embodiment;
**Fig. 6** is a perspective view of the bucket of the present invention according to a still further embodiment;
**Fig. 7** is a side view of the bucket of the present invention according to a still further embodiment;
**Fig. 8** is a perspective cross-sectional view taken along line III-III in Fig. 1A, showing an additional embodiment;
**Fig. 9** is a perspective cross-sectional view taken along line III-III in Fig. 1A, showing another embodiment, wherein a bottom surface of a tool organizer covers the bottom surface of the bucket;
**Figs. 10A** through **10E** are perspective views showing embodiments regarding placement of the axle (Figs. 10B and 10C do not show the axle, Fig. 10E does not show the wheels); and
**Figs. 11A** through **11C** are perspective views are the bucket according to several embodiments (all shown without wheels or arm).

### DETAILED DESCRIPTION OF THE INVENTION

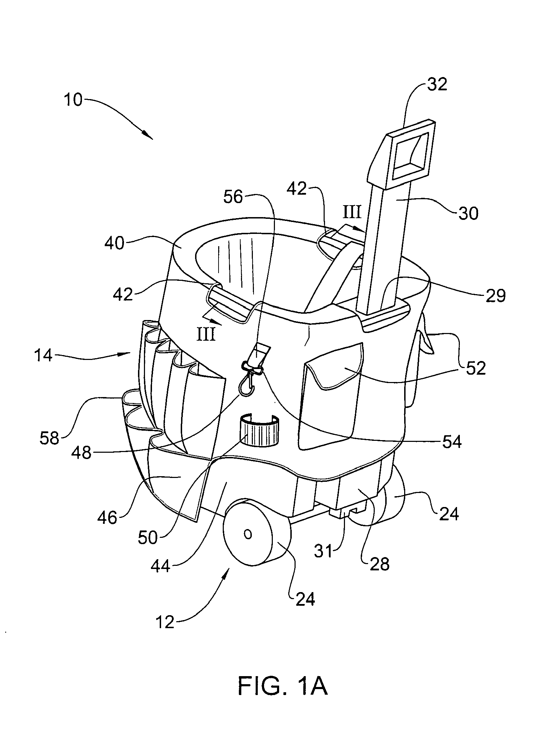

Fig. 1A shows a tool caddy, generally designated as **10.** The receptacle comprises a rigid bucket **12,** and a non-rigid tool organizer **14.** The bucket **12** is typically a five gallon container (though any size is suitable) made from a high density polymer such as plastic.

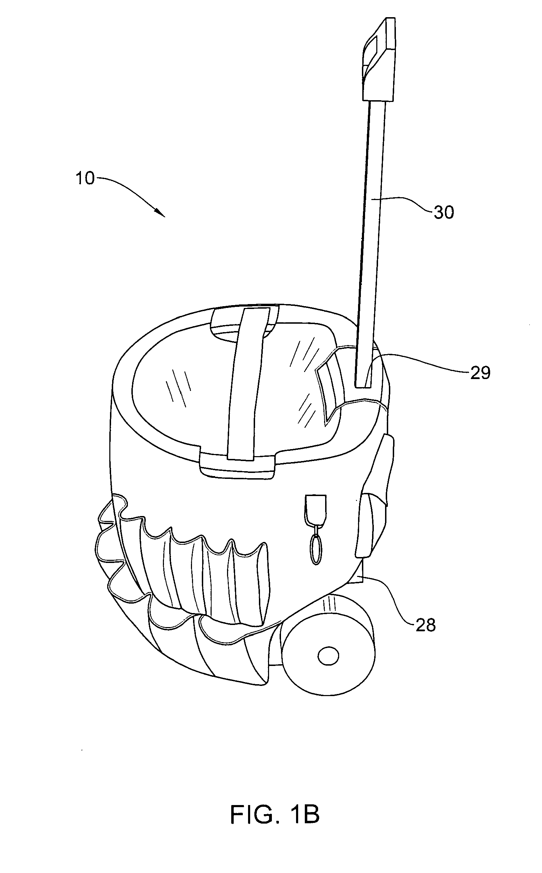

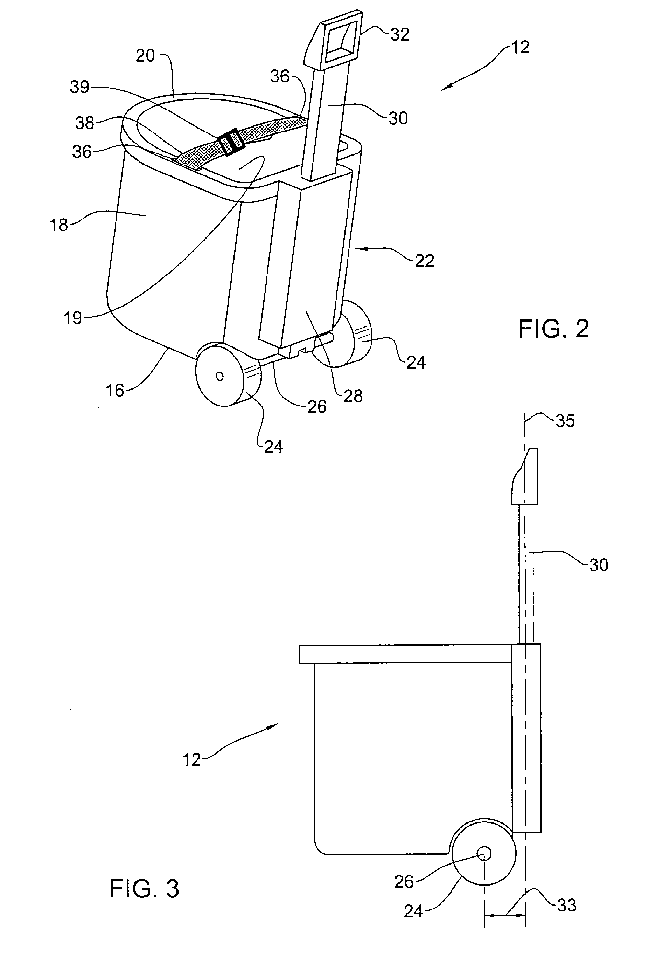

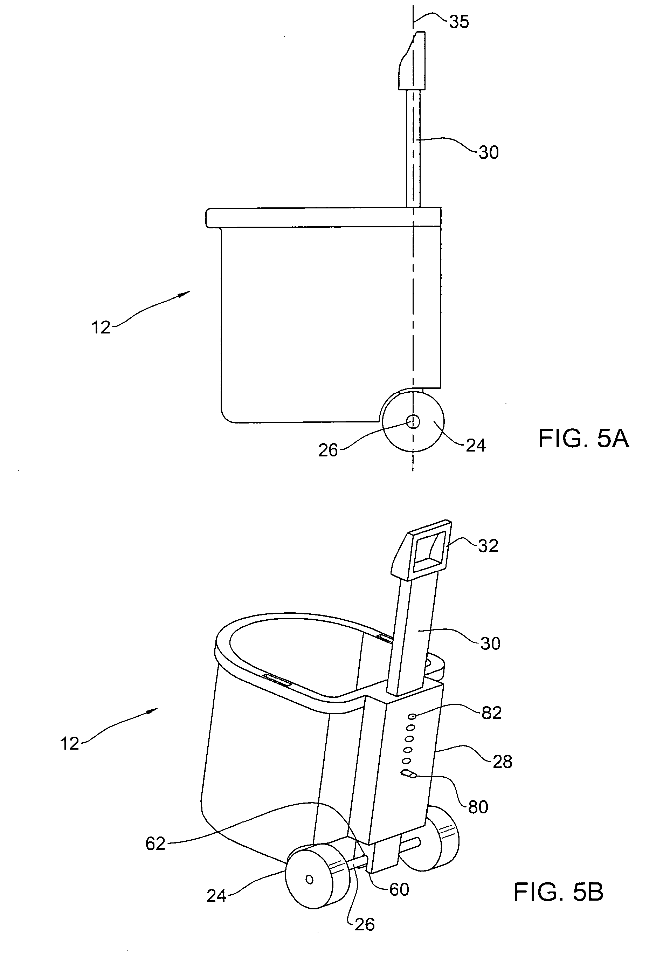

As seen in Fig. 2, the bucket **12** comprises a bottom support wall **16,** vertical sidewalls **18** extending upwardly therefrom and defining a bucket interior **19,** and an upper rim **20.** The bucket **12** further comprises, at a back face **22,** two wheels **24** attached by a common axle **26** extending therebetween and passing through axle supports formed in the bucket **12.** Extending upwardly along the height of the bucket **12** on the back face **22** thereof and integrated therein is a sheath **28.** The sheath **28** is a longitudinally extending wall giving rise to an aperture **29** of substantially constant cross-section and which follows a straight path, extending upright and parallel to a longitudinal axis of the bucket **12.**
Received within aperture **29** formed by the sheath **28** is a retractable arm **30** having, at its upper end, a handgrip **32.** The retractable arm **30** is extendable between a fully retracted position (as in Fig. 1A), in which the bottom end **31** thereof is disposed at or near the bottom end of the sheath **28,** and a fully extended position (as in Fig. 1B), in which the bottom end thereof is disposed at or near the top of the sheath. The retractable arm **30** may be arrested in one or more intermediate positions between the fully retracted and fully extended positions. For example, there may be a snap-arresting arrangement, or a springloaded pin **80** extending from the arm **30,** and a series of apertures **82** disposed in the sheath **28** adapted to receive the pin **80** at several arresting positions and arrest thereby the arm **30** (as in Fig. 5B, the pin **80** shown received within an aperture **82).**

As seen most clearly in Fig. 3, the sheath **28** is coincident with plane **35** which lies parallel to the axle **26.** The axle **26** is disposed away from the plane **35** toward the front **34** of the bucket **12.** In operation, the user pulls on the arm **30** to lift the bucket **12,** which may be loaded with heavy tools, thereby tilting the tool caddy to allow for easy transport on its wheels. By locating the sheath **28** thusly, there is provided a larger moment arm distance **33,** which leads to a greater mechanical advantage in lifting the bucket. This arrangement permits easy tilting of the bucket by using the arm **30.**

The rim **20** comprises two apertures **36** adapted to receive a handle strap **38**. The handle strap is preferable a fabric band somewhat longer than the diameter of the bucket interior **19.** This provides slack for the handle strap **38** which permits comfortable carrying of the bucket **12,** even when laden with tools. The handle strap **38** may be detachable from the bucket, to permit placement therein of large or numerous articles. The handle strap **38** may comprise a buckle **39** in order to facilitate selective adjustment of the strap handle length.

Reverting now to Fig. 1A, the tool organizer **14** is shown in its operational position draped on the bucket **12.** The tool organizer is preferably made from a sturdy material, such as canvas or nylon. The edges thereof may be bounded with fabric which is of a different color that the rest of the tool organizer. It comprises a rim receiving portion **40** which has three openings **42** which, when the tool organizer is in its operational position, are aligned with the apertures **36** and the top of the sheath **28.** This arrangement allows easy passage therethrough of the arm 30 and the handle **38.**

The tool organizer **14** is of sufficient height so as to substantially cover the front **34** of the bucket **12.** In this way, the surface area which can be utilized for storage of tools is maximized. It is contoured in an area **44** that corresponds, when draped on the bucket **12,** to the wheels **24,** in order to prevent interference of the tool organizer **14** therewith during wheeled transport of the tool caddy, and allowing the tool organizer to cover the back face **22** of the bucket. The tool organizer **14** at least partially covers the bucket interior **19,** while not obstructing the majority thereof.

The tool organizer **14** is provided with various contrivances designed to hold tools having a range of different shapes. These contrivances include, but are not limited to, pockets **46,** hooks **48,** and loops **50.** In addition, some or all of the pockets **46** may comprise a flap **52** adapted to close them. The pockets are formed by attaching a pocket forming strip **54** along a portion of the tool organizer. The pockets **46** and respective flaps **52** may comprise cooperating fastening means such as a hook and loop arrangement or snaps for selectively retaining the flaps **52** in a closed position. Each hook **48,** which may be a swivel snap or slide bolt hook, is secured to a ring **54** which is in turn secured to the tool organizer **14** by a loop of material **56** which is sewn thereto.

Owing to the construction of the tool organizer **14** as described above, especially in reference to the openings **42** and the contour in the area **44** corresponding to the wheels, contrivances, as described above, may be placed around the entire bucket **12,** including along the back face **22** without interfering with the use of the retractable arm **30** or the wheels **24.**

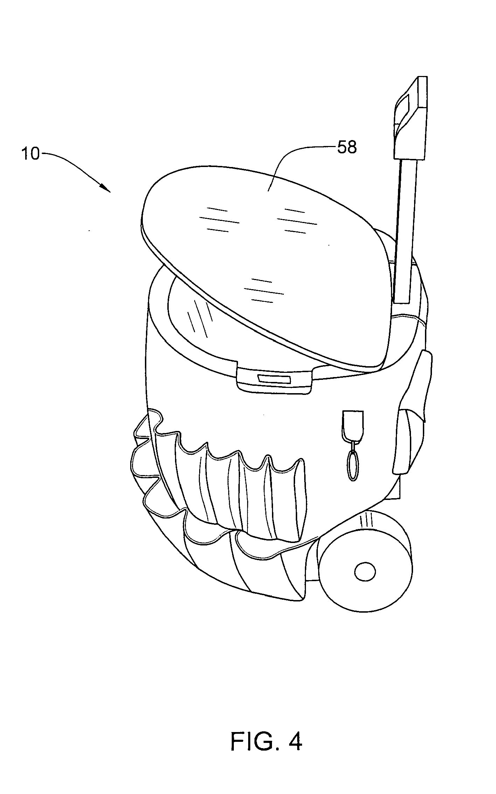

As seen in Fig. 4, the tool organizer **14** may comprise an integrated top cover **58.** The cover **58** is preferably made from the same material as the tool organizer **14,** and may be designed with the same color pattern. It is of sufficient size so as to protect to tools from rain without having to remove same from their respective storage locations, be they one of the contrivances descried above or the bucket interior **19.** The tool organizer **14** may optionally be provided with a pouch, adapted to store the cover **58** when not in use.

Various configurations of the arm **30** are possible. According to one embodiment, shown in Figs. 5A and 5B, the plane **35** coincident with the arm **30** intersects the axle **26.** The arm therefore is provided with a straight slot **60** which is adapted to receive therein the axle **26.** The width of the slot **60** should be at least slightly larger than the diameter of the axle **26,** in order to facilitate easy receipt therein. The height of the slot is sufficient so that at least a minimal clearance is provided between the axle **26** and the top of the slot **62** when the arm 30 is in its fully retracted position.

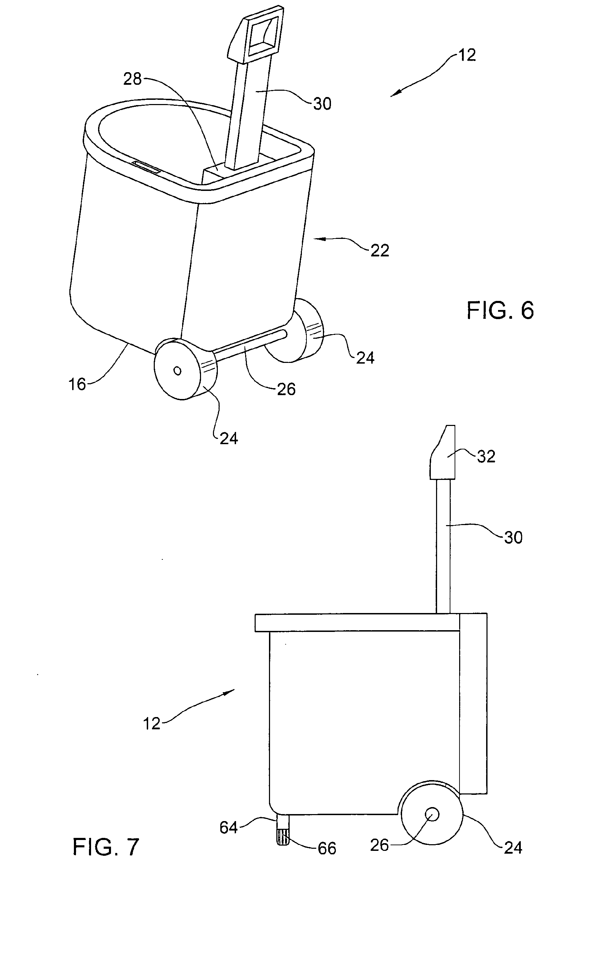

Another embodiment is shown in Fig. 6, in which the sheath **28** in integrated into the interior of the bucket **12,** opposite the back face **22.** This embodiments permits a more compact design of the bucket **12.**

According to a further embodiment, as shown in Fig. 7, there is provided at least one support foot **64,** disposed on the bottom of the bucket **12,** opposite the wheels **24.** The foot may be formed as an integrated part of the bucket, or may be formed separately and attached thereto. If formed separately, the support foot **64** may be made from a viscoelastic material to prevent sliding. Alternatively, the support foot **64** may optionally comprise a pad **66,** made from a viscoelastic material.

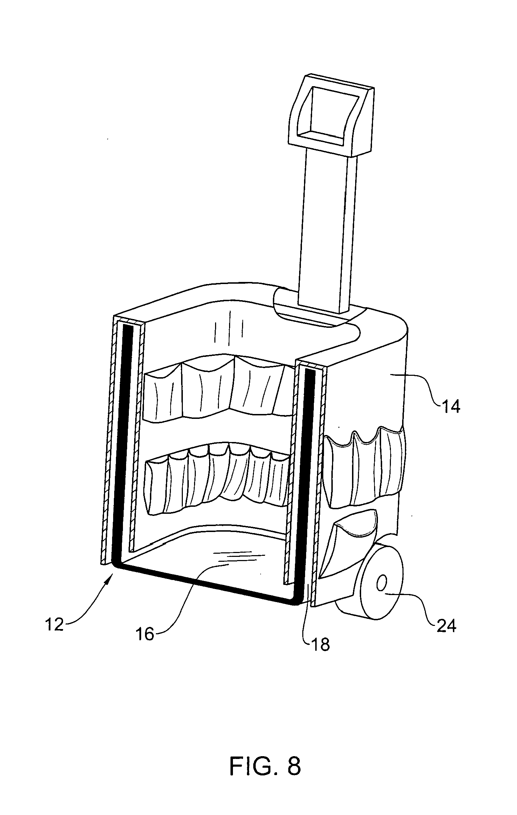

According to a still further embodiment of the present invention, the tool carrier **14** is adapted to fully cover the interior walls of the bucket **12** (Fig. 8). The portion of the tool organizer **14** adapted to cover in interior of the bucket **12** is of sufficient length to cover the entire vertical sidewalls **18.**

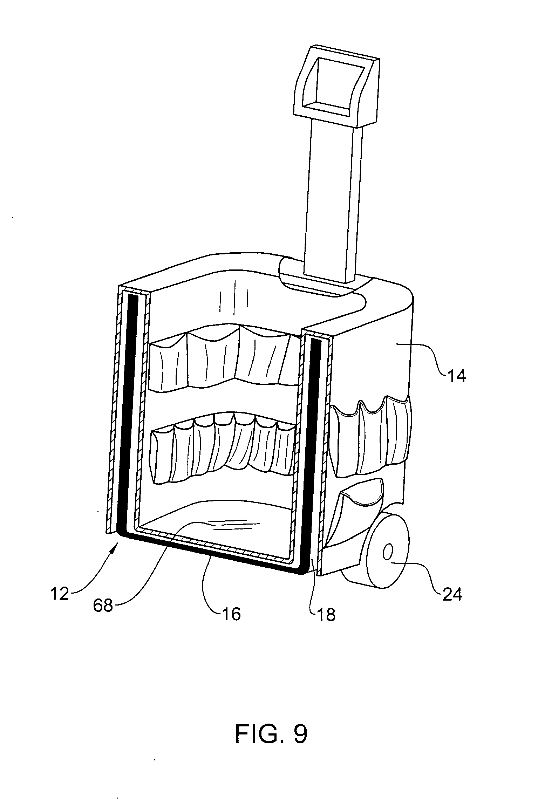

As shown in Fig. 9, there is provided an interior bottom surface **68** for the tool organizer **14** according to a still further embodiment of the present invention. The height of the tool organizer is sufficient to allow the bottom surface **68** to rest on the bottom support wall **16** of the bucket **12.** This limits accidental puncture of the bottom surface **68** by sharp or heavy objects placed thereupon.

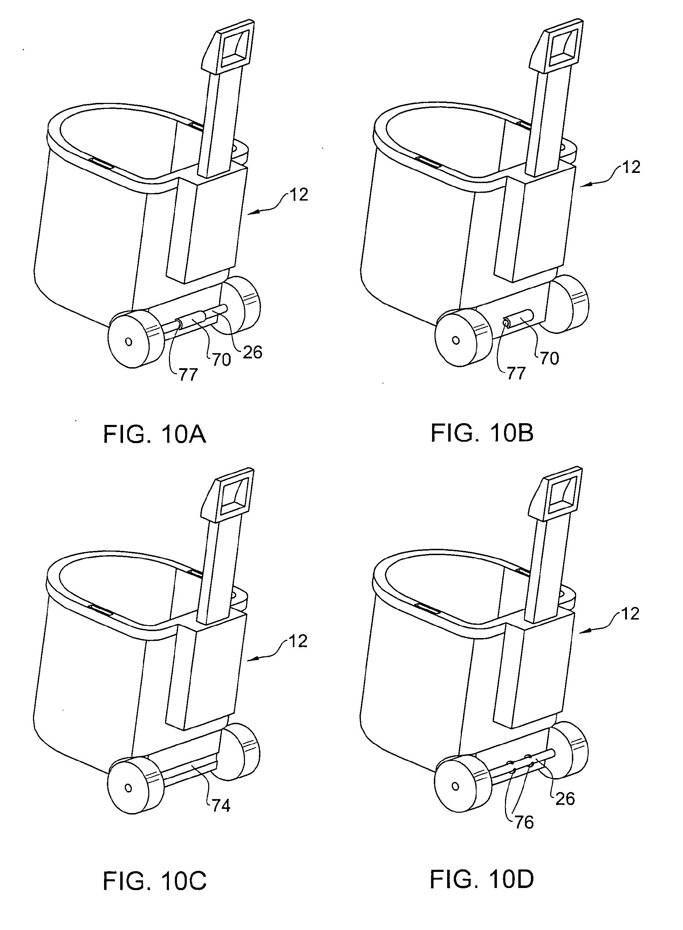

According to an additional embodiment, the axle **26** is retained within the back wall. This may be accomplished by a protrusion **70** formed as part of the back face **22** having an aperture **72** therethrough adapted to receive the axle **26,** (as in Fig. 10A and Fig. 10B) or through the use of a groove **74** integrated into the back face (as in Fig. 10C). Alternatively, there may be provided grasping members **76,** such as clips, incorporated into the back face **22,** said grasping members being adapted to snappably receive the axle **26** (as in Fig. 10D). The bucket may be adapted to receive the axle through its interior, via apertures **78** disposed in its side (as in Fig. 10E).

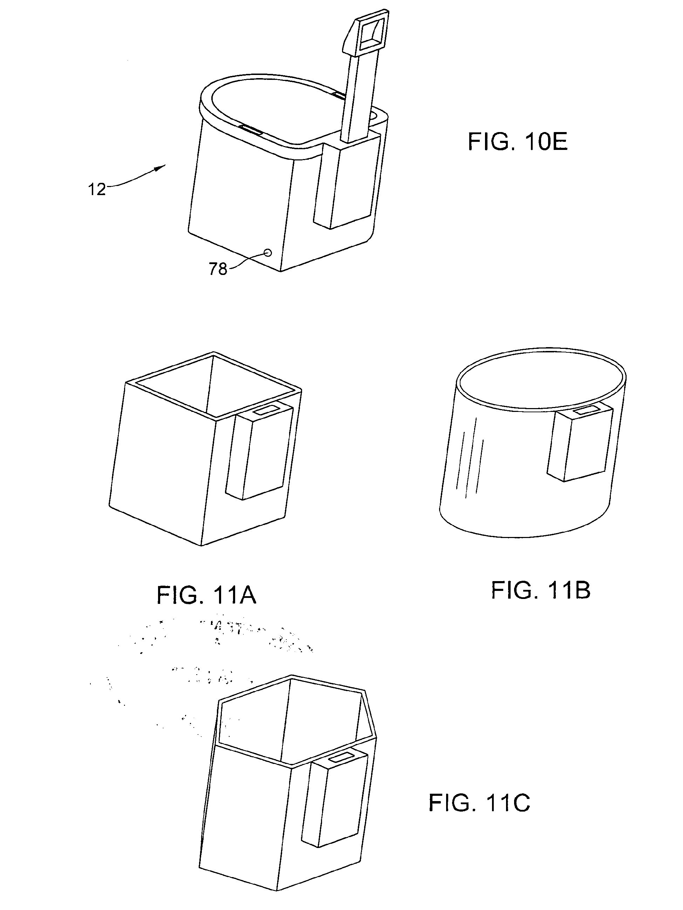

The shape of the bucket is not limited to the ones illustrated in the figures henceforth. Other embodiments of the shape of the bucket, such as a square (as in Fig. 11A), a circle (as in Fig. 11B), and a hexagon (as in Fig. 11C) are possible.

It will be appreciated by persons skilled in the art that the present invention is not limited by what has been particularly shown by the exemplary embodiment described hereinabove. Thus, the tool organizer and bucket can be embodied by a variety of aspects within the scope of the invention, *mutatis mutandis.*

## Claims

1. A tool caddy, comprising a rigid bucket and a non-rigid tool organizer, the bucket comprising:
(a) a bottom, support portion, with vertical walls extending upwardly therefrom, forming front, back and side faces and defining a bucket interior, and an upper rim;
(b) at least two wheels;
(c) a retractable arm with a handgrip, the arm extendable between a fully extended position and a fully retracted position and attached to the bucket at the back face thereof;
(d) a sheath, integral with the back face of the bucket and giving rise to a receptacle adapted for slidingly receiving the arm;
the tool organizer comprising:
(e) exterior flaps adapted to cover outward faces of the bucket and interior flaps adapted to cover interior faces of the bucket, said exterior flaps being of sufficient length to substantially cover at least the entire front face of the bucket and is formed so as to not interfere with the operation of the wheels; and
(f) contrivances for retaining various articles, said contrivances being disposed on the flaps.

2. A tool caddy according to Claim 1, further comprising a non-rigid handle.

3. A tool caddy according to Claim 2, wherein the handle is length-adjustable.

4. A tool caddy according to Claim 2 or 3, further comprising an arrangement for detachably connecting the handle to the upper rim of the bucket.

5. A tool caddy according to Claim 2, 3 or 4, wherein the tool organizer further comprises at least two openings adapted to allow passage therethrough of the handle.

6. A tool caddy according to any preceding Claim, wherein at least some of the at least two wheels are joined to each other and attached to the bucket by a common axle extending therebetween.

7. A tool caddy according to any preceding Claim, wherein the tool organizer further comprises an opening sized to allow passage therethrough of the arm.

8. A tool caddy according to any preceding Claim, wherein the contrivances include at least one from the set comprising hooks, loops, pockets, and pouches.

9. A tool caddy according to any preceding Claim, wherein the sheath is integral external to the bucket on a back face thereof and coincident with a plane, the axle disposed away from the plane in a direction toward the front face.

10. A tool caddy according to any preceding Claim, wherein the sheath is located in a plane coincident with the axis.

11. A tool caddy according to Claim 10, wherein the arm comprises a slot adapted to receive the axle when the arm is in the fully retracted position.

12. A tool caddy according to any preceding Claim, wherein the sheath is integral to an interior wall of the bucket opposite a back face and coincident with a plane, the plane being disposed between the center of gravity of the bucket and the axle.

13. A tool caddy according to any preceding Claim, further comprising a cover adapted to protect the contents retained in the tool caddy.

14. A tool caddy according to Claim 13, wherein the cover is adapted to cover the bucket interior.

15. A tool caddy according to Claim 13 or 14, wherein the cover is adapted to cover the entire tool caddy.

16. A tool caddy according to Claim 13, 14 or 15, wherein the cover and the tool organizer comprise complementary closing arrangements.

17. A tool caddy according to any one of Claims 13 to 16, wherein the cover is integral to the tool organizer.

18. A tool caddy according to any one of Claims 13 to 17, wherein the tool organizer comprises a pouch adapted to store the cover.

19. A tool caddy according to any preceding Claim, further comprising at least one support foot integral to the bucket for supporting to bucket in an essentially horizontal position.

20. A tool caddy according to Claim 19, wherein the support foot further comprises a pad.

21. A tool caddy according to any preceding Claim, wherein the tool organizer is adapted to fully cover interior vertical side walls.

22. A tool caddy according to Claim 21, wherein the tool organizer further comprises a bottom surface.

23. A tool caddy according to Claim 22, wherein the bottom surface rests directly on the bottom support portion of the bucket.
